# EUROPÄISCHE PATENTANMELDUNG

(11) **EP 3 289 892 A1**
(43) Veröffentlichungstag der Anmeldung: **07.03.2018**
(21) Anmeldenummer: 17186180.0
(22) Anmeldetag: 14.08.2017
(51) Int. Cl.: A24F 13/00, A24F 13/06, A24D 3/00, B01D 46/00

(54) **RAUCHERBEDARFSGEGENSTAND ZUR GERUCHSREINIGUNG VON RAUCH WÄHREND DES AUSATMENS**

(30) Priorität: 30.08.2016 DE 102016010380
(71) Anmelder: Yilmaz, Murat, 47166 Duisburg (DE)
(72) Erfinder: Yilmaz, Murat, 47166 Duisburg (DE)
(74) Vertreter: Demski, Siegfried

(57) **Zusammenfassung**

Die Erfindung betrifft einen Geruchsfilter (20) für Raucher, insbesondere Tabak- und Cannabisraucher, umfassend zumindest eine Hülle mit einem Filtermedium.

Mithilfe der vorliegenden Erfindung wird ein Geruchsfilter (20) aufgezeigt, welcher mit sehr niedrigem Atemluftdruck betrieben werden kann, wobei er gleichzeitig leistungsstark und auf eine hohe Benutzungsdauer ausgelegt ist. Dies wird durch eine poröse, hygroskopische Hülle erreicht, in der als Filtermedium ein gasdurchlässiger, offenporiger Filterschaumstoff (27) mit geruchsadsorbierenden Materialien einliegt, wobei das Filtermedium durch einen offenporigen, retikulierten Filterschaumstoff (26, 28), eingangs- und ausgansseitig eingebettet ist.

## Beschreibung

Die vorliegende Erfindung betrifft einen Geruchsfilter für Raucher, insbesondere Tabak- und Cannabisraucher, umfassend zumindest eine Hülle mit einem Filtermedium zur Geruchsreinigung von Tabakrauch, Cannabisrauch und Cannabis-Tabak-Mischungen während des Ausatmens.

Der während des Rauchvorgangs einer Tabakzigarette, Tabak-Cannabis-Zigarette oder von reinem Cannabis ausgeatmete Rauch führt zu einer erheblichen Geruchsbelastung für die Menschen in der Umgebung des Konsumenten. Um das Problem der Geruchsbelastung zu lösen, sind aus dem Stand der Technik mehrere verschiedene Lösungen bekannt, welche zum Teil auf dem Markt erhältlich sind.

Geruchsfilter üblicher Bauart weisen einen Aktivkohlefilter und zusätzlich einen weiteren Filter auf, welcher sich je nach Art vor oder hinter dem Aktivkohlefilter befindet. Dieser zweite Filter ist überwiegend ein HEPA-Filter (High Efficiency Particulate Air-Filter). In manchen Ausführungen werden weitere Filterelemente der oben erwähnten Filterelemente zwischengeschaltet, welche aus Papier, Kunststoffvlies und/oder anderen Materialien bestehen können. Des Weiteren ist den bekannten Ausführungen gemein, dass sie sich in einer Kunststoffhülle oder einer Kunststoffverpackung befinden.

Die Kombination der verwendeten Filtern, insbesondere der Einsatz von HEPA-Filtern, führt hinter jedem Filter zu einem Druckabfall. Dieser muss von dem Benutzer durch erhöhten Ausatemluftdruck kompensiert werden, um die Atemluft durch das Gerät zu befördern. Derartige Filter werden somit vom Verbraucher als schwer durchgängig empfunden. Dieser unerwünschte Nachteil wird durch die Auswahl des Trägermaterials und die Auswahl der Aktivkohlenart verstärkt. Zudem leidet die Benutzungsdauer erheblich durch die eingesetzte Art der Aktivkohle und des Trägermediums. Die Verwendung einer Verpackung aus Kunststoff trägt zusätzlich zur verkürzten Lebensdauer dieser Geruchsfilter bei.

Neben dem Problem der Durchlässigkeit besteht bei der Benutzung existierender Geruchsfilters vergleichbarer Art das Problem der geringen Benutzungsdauer, welche durch die großen Mengen an Teer im Tabakrauch und auch im Cannabisrauch begründet liegt. Aus diesem Grund sind vorhandene Geruchsfilter nur für den Gebrauch von Bong-Rauchern konzipiert, welche Cannabis ohne oder nur mit sehr geringen Mengen an Tabak konsumieren. Die Verwendung von existierenden Geruchsfiltern durch Joint-Raucher führt aufgrund der großen Menge an Tabak im Joint schnell zu einer Verstopfung des Geruchsfilters, bedingt durch die hohe Menge an Teer.

Atemluft ist bei 37 Grad Celsius zu 100% mit Wasser gesättigt, wodurch absolut 44 mg Wasser pro Liter ausgeatmete Luft entstehen. Da der Mensch durchschnittlich 0,5 Liter Atemzugvolumen besitzt, halbiert sich der Wert zu 22 mg Wasser pro Ausatmenvorgang. Diese Menge kondensiertes Wasser sammelt sich pro Ausatmung in der Aktivkohle an und reduziert somit ihre Aktivität, da Aktivkohle zur Luftfiltration bekanntermaßen feuchtigkeitsempfindlich ist. Ein weiterer Teil der Atemluftfeuchtigkeit kondensiert an den Rändern der Außenwand aus Kunststoff und tropft möglicherweise auf die Aktivkohle. Das Problem der Wassersättigung wurde im Stand der Technik nicht bedacht, und es werden keine Lösungsansätze geboten.

Die Aufgabe der Erfindung besteht darin, einen leistungsstarken, auf hohe Kapazität ausgelegten Geruchsfilter aufzuzeigen, der auch von Joint-Rauchern langlebig benutzt werden kann, der mit einem sehr niedrigen Atemluftdruck betrieben werden kann und dessen Hülle aus einem biologisch abbaubarem Material besteht.

Erfindungsgemäß wird die Aufgabe dadurch gelöst, dass es sich um eine poröse Hülle mit einer eingangsseitigen Öffnung handelt, welche zur Aufnahme eines Mundstückes vorgesehen ist, in der als Filtermedium ein gasdurchlässiger, offenporiger Filterschaumstoff mit geruchsadsorbierenden Materialien einliegt, wobei das Filtermedium durch einen offenporigen, retikulierten Filterschaumstoff eingangs- und ausgansseitig eingebettet ist. Weitere vorteilhafte Ausgestaltungen ergeben sich aus den Unteransprüchen.

In der vorliegenden Erfindung werden die Art der verwendeten Aktivkohle und die Art der Verkörperung und Verpackung eines Geruchsfilters miteinander auf neue und erfinderische Weise kombiniert, um sich gegenseitig verstärkende Merkmale zu erreichen, wodurch ein Synergieeffekt erzielt wird.

Die Verpackung bzw. die äußere Hülle der Erfindung besteht aus einer quaderförmigen Schachtel, besonders bevorzugt in Form einer Faltschachtel, welche die Abmessungen 160 x 120 x 70 mm (H x B x T), bevorzugt 120 x 90 x 50 mm, besonders bevorzugt 85 x 65x 25 mm aufweist. Eine ausreichende Luftdichtigkeit wird durch Verkleben der Laschen mit Klebeband erzielt.

In einer besonderen Ausgestaltung kann der Karton eine poröse, hygroskopische Hülle aufweisen, und/oder die Schaumstofffilter können sich in einer Hülle aus einem porösen, hygroskopischen, adsorbierenden Material befinden, welches aus Cellulose, bevorzugt Zellstoff, besonders bevorzugt aus Karton besteht.

Die äußere Hülle weist eine Dicke von 0,3 bis 5 mm, eine besonders bevorzugte Dicke von 0,3 bis 2,0 mm, und ein Gewicht von 200 bis 500 Gramm pro Quadratmeter, bevorzugt von 290 bis 430 Gramm pro Quadratmeter, besonders bevorzugt 320 bis 400 Gramm pro Quadratmeter auf.

Durch eine Öffnung in dem oberen Boden der Faltschachtel gelangt ein Mundstück aus lebensmittelechten Polyvinylchlorid, Polycarbonat, Polyethylen, besonders bevorzugt aus Polypropylen mit oder ohne Rückschlagventil, in das Innere der Schachtel, wo es auf einem Filter aufliegt. Das Mundstück, welches in verschiedenen Formen, beispielsweise mit einem Plateaumundstück oder einem Flanschkragen, ausgestaltet sein kann, wird durch zumindest einen, je nach Ausführungsform zwei Ringen dichtend an der Faltschachtel befestigt, wobei der zumindest eine Ring aus Kautschuk, Nitril-Butadien-Kautschuk, Naturkautschuk, besonders bevorzugt Silikon-Kautschuk besteht und die Form einer Kabeltülle, besonders bevorzugt eines O-Ringes besitzt.

Um eine Verstopfung des Geruchsfilters, bedingt durch die hohe Menge an Teer, zu vermeiden ist vorgesehen, dass eine erste Kondensationsbarriere unterhalb des Mundstücks angeordnet ist. Diese erste Barriere reduziert die Menge an Kondensat (Teer), welche sich auf die Aktivkohle niederschlagen würde. Des weiteren ist diese Barriere mit weiten offenen Poren ausgestattet, welche im Vergleich zu HEPA-Filtern durch das Kondensat nur in verringerten Umfang verstopft werden, sodass eine wesentlich längere Haltbarkeit gewährleistet ist. Durch die Verwendung des offenporigen Schaumstoffes als erste Kondensationsbarriere wird somit die Lebensdauer des Geruchsfilters bedeutend verlängert, da es länger durchlässig bleibt und erst sehr spät zur Verstopfung neigt. Darüber hinaus wird durch den offenporigen Schaumstoff die Standzeit der Aktivkohle wesentlich verlängert.

Der in dieser Erfindung verwendete Filter zur Geruchsreinigung besteht aus einem atemluftdurchlässigen, retikulierten Filterschaumstoff, beispielsweise einem offenporigen, retikulierten Filterschaumstoff eines Polymers. Als Polymere kommen vorzugsweise Polyvinylchlorid, Polyethylen oder Polypropylen infrage, besonders bevorzugt kommt Polyurethan zum Einsatz. Um einen möglichst geringen Atemluftdruck zum Betrieb dieser Erfindung zu gewähren und zusätzlich eine hohe Beladung mit geruchsabsorbierendem Material zu besitzen, weist der Filterschaumstoff eine Porosität von 5 bis 40 pores per inch (ppi) auf, bevorzugt eine Porosität von 5 bis 20 ppi, besonders bevorzugt 10 bis 15 ppi. Der Polyurethanfilterschaumstoff ist mit einem geruchsadsorbierenden Material, besonders bevorzugt mit Aktivkohle beladen.

Ein neuer und unkonventioneller Weg wird durch die Auswahl der Aktivkohle beschritten, bei der es sich um Kornaktivkohle handelt. Fein- und mittelkörnige Kornaktivkohlen werden hauptsächlich zur Wasseraufbereitung und -reinigung eingesetzt.

Bei der Verwendung von Kornaktivkohle für die Luftreinigung werden in der Regel Körnungen von 3 bis 5 mm verwendet. In einer besonderen Ausgestaltung wird bei der erfindungsgemäßen Vorrichtung jedoch einer Korngröße von 0,2 bis 4,00 mm, besonders bevorzugt mit einer Korngröße von 0,3 bis 1,0 mm, verwendet. Eine weitere vorteilhafte Ausgestaltung sieht einen Kornaktivkohlefilterschaum aus einem offenporiger, retikulierter Filterschaumstoff aus Polyvinylchlorid, Polypropylen, Polyethylen, besonders bevorzugt aus Polyurethan mit einer Porosität von 5 bis 40 ppi, bevorzugt mit 5 bis 20 ppi, besonders bevorzugt mit 10 bis 15 ppi vor.

Der bevorzugte Polyurethan-Kornaktivkohlefilterschaum weist eine Beladung mit Kornaktivkohle von 75 kg bis 160 kg Kornaktivkohle pro Kubikmeter, bevorzugt 90 bis 150 kg Kornaktivkohle pro Kubikmeter, besonders bevorzugt 100 bis 150 kg Kornaktivkohle pro Kubikmeter, auf.

Die Atemluft ist mit zu 100% mit Wasser gesättigt, und das kondensierende Wasser sammelt sich in dem Geruchsfilter an der Innenwand und wird möglicherweise von der Aktivkohle aufgenommen. So wird die Wirksamkeit der Aktivkohle zur Reinigung der Luft stark eingeschränkt. Um diesen Effekt zu reduzieren, wird dem bevorzugt verwendetem Polyurethan-Kornaktivkohle-Schaum eine Kondensationsbarriere aus einem offenporigen, retikulierten Filterschaumstoff aus Polymeren, Polyvinylchlorid, Polyethylen, Polypropylen, besonders bevorzugt aus Polyurathen, vorgeschaltet, der eine Porosität von 50 bis100 ppi, besonders bevorzugt 80 bis 100 ppi, aufweist, und eine Dicke von 0,2 bis 8 cm, bevorzugt 0,5 bis 4 cm, besonders bevorzugt 0,5 bis 1,5 cm besitzt.

Ein offenporiger, retikulierter Filterschaumstoff aus Polyvinylchlorid, Polypropylen, Polyethylen, besonders bevorzugt aus Polyurethan mit einer Porosität von 40 bis 100 ppi, besonders bevorzugt mit 70 bis 100 ppi befindet sich in einer vorteilhaften Ausgestaltung in einer Lage unterhalb des Mundstück und oberhalb des Kornaktivkohlefilterschaums sowie in einer weiteren Lage unterhalb des Kornaktivkohlefilterschaums.

Die obere Lage weist hierbei beispielsweise die Dimensionen 5 x 65 x 27 mm auf. Die folgende Schicht des Kornaktivkohlefilterschaums besitzt in beispielhafter Ausgestaltung die Maße 60 x 65 x 25.

Der Kornaktivkohlefilterschaum weist eine Größe von 157,5 x 120 x 70 mm (Länge x Breite x Tiefe) auf, wobei die 70 mm Tiefe durch die Kombination von 5 Platten Aktivkohlefilterschaum von jeweils 14 mm Tiefe erreicht werden, bevorzugt 117,5 x 90 x 50 mm, wobei die 50 mm Tiefe durch vier Platten Aktivkohlefilterschaum erreicht werden und besonders bevorzugt 86 x 66 x 25 mm, wobei die 25 mm Tiefe durch zwei Platten Aktivkohlefilterschaum erreicht werden.

In Weiterer Ausgestaltung ist vorgesehen, dass das Filtermedium zumindest teilweise aus Aktivkohlepellets bestehen kann, welche aus ausgepresstem Aktivkohlepulver bestehen, wobei die Aktivkohlepellets sind in diesem Fall 4 bis 9 mm lang, haben einen Durchmesser von 2 bis 4 mm und weisen eine Oberfläche von 1.200 Quadratmeter pro Gramm auf.

Diese Kondensationsbarriere, welche sich direkt unterhalb des Mundstücks befindet, weist eine Umgebungstemperatur von 20 Grad Celsius in Räumen auf und bewirkt beim Durchströmen der Luft keinen nennenswerten Druckabfall. Auf diese Art und Weise kann durch Kondensation an den Wänden des Polyurethanschaums der Wassergehalt der Ausatemluft reduziert werden.

Um das Problem der Atemluftfeuchtigkeit zu reduzieren, bezieht die erfindungsgemäße Vorrichtung zusätzlich die äußere Hülle oder die Verpackung der Erfindung ein. Es wird ein poröses, hygroskopisches, adsorbierendes Material eingesetzt, welches aus Cellulose, bevorzugt Zellstoff, besonders bevorzugt aus Karton, besteht. So wird die Feuchtigkeit innerhalb des Geruchsfilters reduziert, das bereits erwähnte Problem der Kondensation der Feuchtigkeit an den Innenwänden des Gerätes verhindert und gleichzeitig ein kostengünstiger, umweltfreundlicher, biologisch abbaubarerer sowie nachwachsender Rohstoff zur Verkörperung verwendet. Des Weiteren stellt diese Auswahl eine unkonventionelle Komponente dar, da Massenprodukte vornehmlich aus Kunststoff bestehen.

Zusätzlich kann in einer weiteren vorteilhaften Ausgestaltung des erfindungsgemäßen Geruchsfilters eine hygroskopische Schicht aus Pierpallets, Naturfasern aus Cellulose, Silikagel, Kieselgel, Calciumclorid oder ähnlichen hygroskopischen Substanzen im Inneren der Faltschachtel angeordnet sein. Diese hygroskopische Schicht kann beispielsweise zwischen zwei Filterschaumstoffen ohne Aktivkohlebeladung angeordnet sein und/oder zwischen einem Filterschaumstoff ohne Aktivkohlebeladung und dem Filterschaumstoff mit Aktivkohlebeladung.

Der Anwender der Erfindung atmet den Rauch der Tabak-, Cannabis- oder Cannabis-Tabak-Mischungen durch das besonders vorzugsweise aus Polypropylen bestehende Mundstück aus, wodurch die mit Rauch angereicherte Atemluft in den erfindungsgemäßen Geruchsfilter eindringt. Der Luftstrom wird durch den Ausatemluftdruck durch die Kondensationsbarriere getrieben, um dann im Polyurethan-Kornaktivkohlefilterschaum von Geruchsstoffen gereinigt zu werden. Noch in derselben Ausatembewegung wird die so gereinigte Ausatemluft durch eine Öffnung am Boden der Erfindung geruchsneutral in die Umwelt abgegeben.

Die Erfindung stellt somit einen unkonventionellen, neuen Weg dar, ein Massenprodukt aus einem biologisch abbaubarem Material zu schaffen, dass sehr einfach und kostengünstig herzustellen ist, sich durch eine sehr hohe Benutzungsdauer als auch sehr geringen Betriebsatemluftdruck auszeichnet, und somit als wesentliche Verbesserungen des Standes der Technik gewertet werden kann.

Die Erfindung wird im Weiteren anhand der Figuren näher erläutert.

Es zeigt
- Fig. 1: die äußere Faltschachtel in einer perspektivischen Vorderansicht,
- Fig. 2: einen Querschnitt durch die erfindungsgemäße Vorrichtung in einer Ausführungsform mit zwei Filterschaumstoffen ohne Aktivkohlebeladung und einem Filterschaumstoff mit Aktivkohlebeladung,
- Fig. 3: einen Querschnitt durch die erfindungsgemäße Vorrichtung in einer Ausführungsform mit drei Filterschaumstoffen ohne Aktivkohlebeladung, einer hygroskopischen Schicht und einem Filterschaumstoff mit Aktivkohlebeladung,
- Fig. 4: einen Querschnitt durch die erfindungsgemäße Vorrichtung in einer Ausführungsform mit zwei Filterschaumstoffen ohne Aktivkohlebeladung, einer hygroskopischen Schicht und einem Filterschaumstoff mit Aktivkohlebeladung, und
- Fig. 5: einen Querschnitt durch die erfindungsgemäße Vorrichtung in einer Ausführungsform mit einem alternativen Mundstück, zwei Filterschaumstoffen ohne Aktivkohlebeladung und einem Filterschaumstoff mit Aktivkohlebeladung.

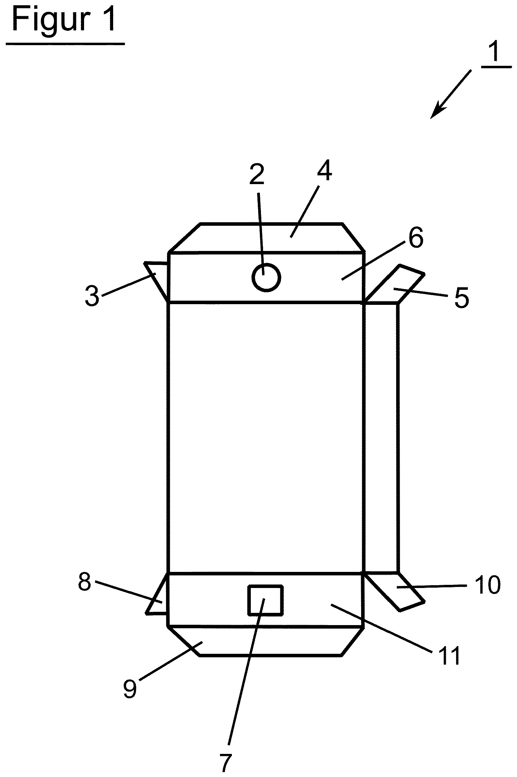

Figur 1 zeigt eine geöffnete äußere Faltschachtel 1 in einer perspektivischen Vorderansicht. Ein oberer Boden 6 der Faltschachtel 1 ist in etwa mittig durch eine obere Öffnung 2 durchbrochen, die bei erfindungsgemäßer Nutzung ein Mundstück aufnimmt. Eine untere Öffnung 7 ist in dem unteren Boden 11 der Faltschachtel 1 angeordnet und dient dem Austritt der gereinigten Luft. Figur 1 zeigt die Faltschachtel 1 in geöffneter Ansicht, ein Schließen ist durch entsprechendes Falten der oberen Faltlaschen 3 und 5 in die obere Öffnung 2 sowie des oberen Bodens 6 auf die gefalteten Faltlaschen 3 und 5 mit anschließender Fixierung durch Einstecken der oberen, zentralen Faltlasche 4 in die Faltschachtel 1 auf der Oberseite und entsprechender Handhabung der Faltlaschen 8, 9, 10 und 11 auf der Unterseite möglich.

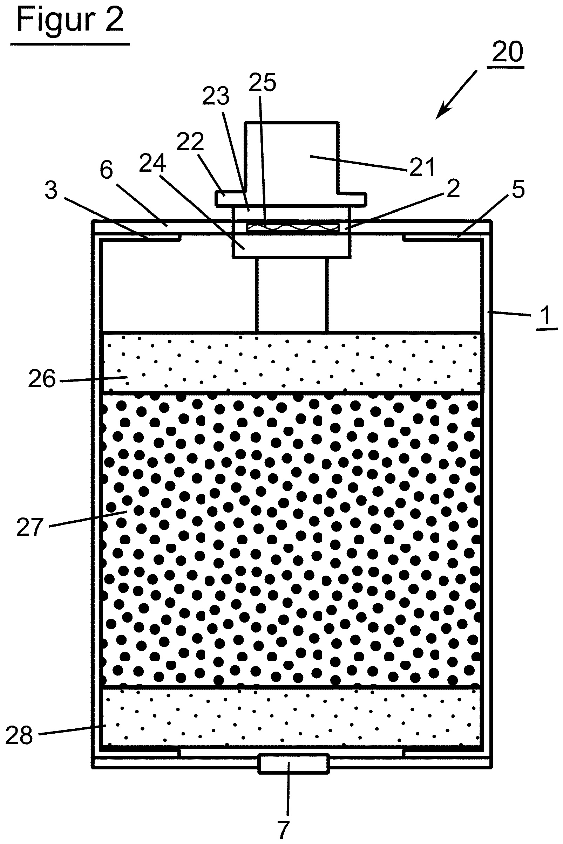

Figur 2 zeigt einen Querschnitt durch einen erfindungsgemäßen Geruchsfilter 20 in einer Ausführungsform mit zwei Filterschaumstoffen ohne Aktivkohlebeladung 26, 28 und einem Filterschaumstoff 27 mit Aktivkohlebeladung. Der Geruchsfilter 20 ist in diesem Fall geschlossen, sodass der obere Boden 6 der Faltschachtel 1 auf den im rechten Winkel aufgeklappten, inneren seitlichen Faltlaschen 3, 5 aufliegt.

Auf der Oberseite durchbricht ein Mundstück 21 den oberen Boden 6 der Faltschachtel 1. Das Mundstück 21 liegt einenends mithilfe eines umlaufenden Plateaumundstücks 22 und zweier Silikon-O-Ringe 23, 24 dichtend oberhalb der Öffnung 2 auf dem oberen Boden 6 der Faltschachtel 1 auf. Anderenends ist das Mundstück 21 mit einem oberen Filterschaumstoff 26 ohne Aktivkohlebeladung verbunden. Im Inneren des Mundstücks 21 ist ein Ventil 25 angeordnet. Der ausgeatmete Luftstrom tritt durch den Druck des Ausatemvorgangs in die obere Öffnung des Mundstücks 21 ein, passiert das Ventil 25 des Mundstücks 21 und wird in den oberen Filterschaumstoff 26 ohne Aktivkohlebeladung geleitet. Dort beginnt der Reinigungsprozess, welcher die Geruchsbelastung durch die ausgeatmete Luft reduziert. Im Weiteren passiert der Luftstrom den Filterschaumstoff 27 mit Aktivkohlebeladung und einen unteren Filterschaumstoff 28 ohne Aktivkohlebeladung, bevor er durch die Öffnung 7 austritt.

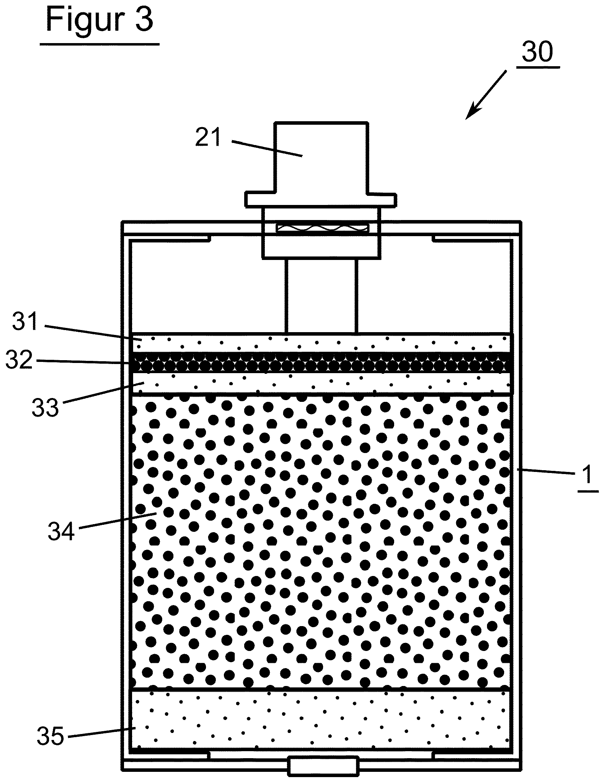

Figur 3 zeigt ebenfalls einen Querschnitt durch einen erfindungsgemäßen Geruchsfilter 30 in einer Ausführungsform mit zwei Filterschaumstoffen 33, 35 ohne Aktivkohlebeladung und einem Filterschaumstoff 34 mit Aktivkohlebeladung. Zusätzlich zu der Ausführungsform von Figur 2 ist oberhalb Filterschaumstoffes 33 ohne Aktivkohlebeladung eine hygroskopische Schicht 32 angeordnet. Die hygroskopische Schicht 32 ist unterhalb eines weiteren Filterschaumstoffes 31 ohne Aktivkohlebeladung angeordnet, welcher unmittelbar am unteren Endstück des Mundstücks 21 anliegt. Durch diese vorteilhafte Anordnung wird das in der Atemluft vorhandene Wasser in der hygroskopischen Schicht 32 gebunden, sodass der Filterschaumstoff 34 mit Aktivkohlebeladung mit wenig, optimaler Weise keinen Kondenswassertröpfchen in Berührung kommt.

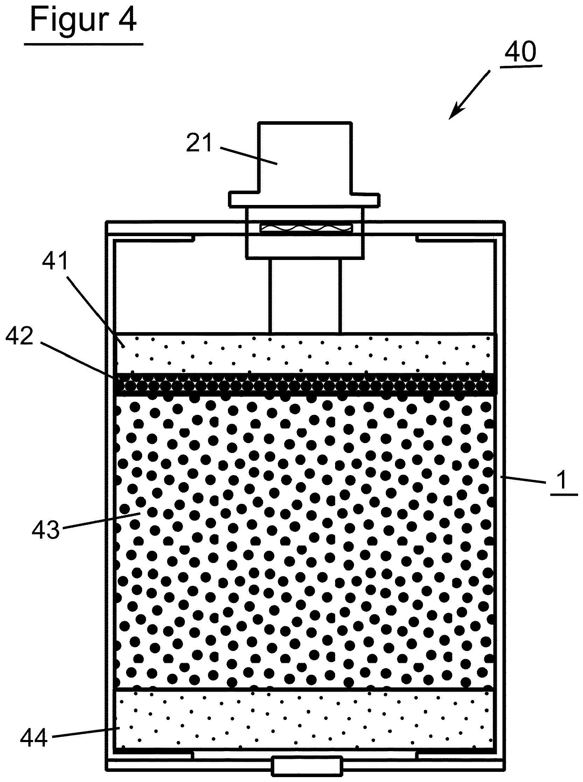

Figur 4 zeigt eine ähnlichen Querschnitt durch einen erfindungsgemäßen Geruchsfilter 40, wobei allerdings neben der hygroskopischen Schicht 42 lediglich zwei Filterschaumstoffen 41, 44 ohne Aktivkohlebeladung und ein Filterschaumstoff 43 mit Aktivkohlebeladung verwendet werden. Wie in der vorherigen Ausführungsform gemäß Figur 3 liegt das Mundstück 21 unmittelbar auf dem Filterschaumstoff 41 ohne Aktivkohlebeladung auf, welcher oberhalb der hygroskopischen Schicht 42 angeordnet ist. Durch Wegfall des weiteren Filterschaumstoffes ohne Aktivkohlebeladung oberhalb des Filterschaumstoffes 43 mit Aktivkohlebeladung können bei der Herstellung Kosten eingespart werden, durch die hygroskopische Schicht 42 wird nichtsdestotrotz die gewünschte Reinigung der Ausatemluft von unerwünschten Gerüchen sichergestellt.

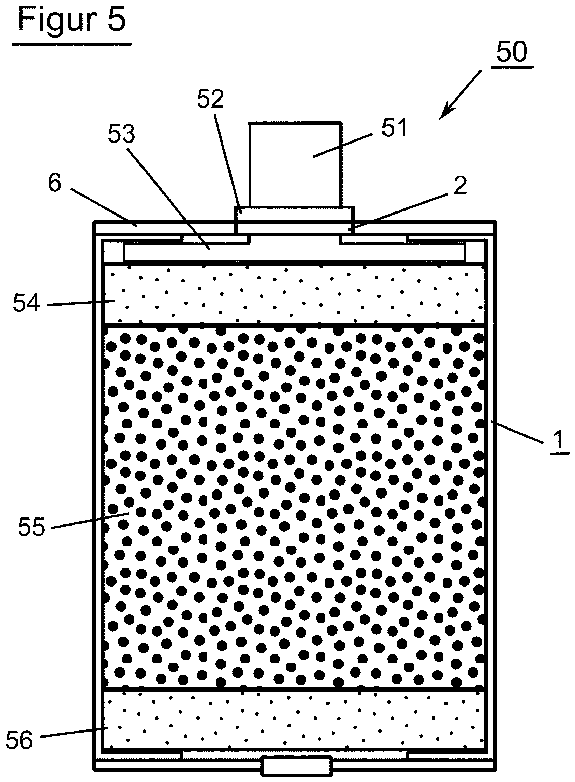

Figur 5 zeigt einen Querschnitt durch einen erfindungsgemäßen Geruchsfilter 50 in einer weiteren Ausführungsform mit zwei Filterschaumstoffen 54, 56 ohne Aktivkohlebeladung und einem Filterschaumstoff 55 mit Aktivkohlebeladung. Bei dieser Ausführungsform weist ein Mundstück 51 kein Plateaumundstück auf, sondern passiert unmittelbar mithilfe eines dichtenden umlaufenden Silikon-O-Rings 52 die Öffnung 2 in dem oberen Boden 6 der Faltschachtel 1. Das Mundstück 51 endet in einem Flanschkragen 53, der die Öffnung 2 hintergreift. Die Ausführungsform des Mundstücks 52 mit einem Flaschkragen 53 besitzt den Vorteil, dass es flacher konstruiert ist und mehr Kapazität im Inneren erlaubt, sodass der Anteil des Filterschaumstoffes 57 mit Aktivkohlebeladung wächst. Zudem ist die Befestigung des Mundstücks 52 stabiler, da diese Ausführungsvariante keinen inneren Silikon-O-Ring zur Befestigung des Mundstücks 52 benötigt. Durch das Hintergreifen der Öffnung 2 ist es weiterhin nicht möglich, das Mundstück 9 ohne Weiteres aus der Öffnung 2 herauszuziehen.

Der in dieser Figur dargestellten Ausführungsvariante des Mundstücks 52 mit Flaschkragen 53 kann wahlweise mit den weiteren Ausführungsformen gemäß Figuren 3 und 4 kombiniert werden. Weitere Ausgestaltungen, insbesondere hinsichtlich der Anordnung und Porosität der Filterschaumstoffe und der hygroskopischen Schicht, die nicht in den Figuren dargestellt sind, sind möglich.

### Bezugszeichenliste

- 1: Faltschachtel
- 2: obere Öffnung
- 3: linke, innere, seitliche Faltlasche
- 4: obere, zentrale Faltlasche
- 5: rechte, innere, seitliche Faltlasche
- 6: oberer Boden der Faltschachtel
- 7: untere Öffnung
- 8: linke, innere, seitliche Faltlasche
- 9: untere, zentrale Faltlasche
- 10: rechte, innere, seitliche Faltlasche
- 11: unterer Boden der Faltschachtel
- 20: Geruchsfilter
- 21: Mundstück
- 22: Plateaumundstück
- 23: Silikon-O-Ring
- 24: Silikon-O-Ring
- 25: Ventil des Mundstücks
- 26: Filterschaumstoff ohne Aktivkohlebeladung
- 27: Filterschaumstoff mit Aktivkohlebeladung
- 28: Filterschaumstoff ohne Aktivkohlebeladung
- 30: Geruchsfilter
- 31: Filterschaumstoff ohne Aktivkohlebeladung
- 32: hygroskopische Schicht
- 33: Filterschaumstoff ohne Aktivkohlebeladung
- 34: Filterschaumstoff mit Aktivkohlebeladung
- 35: Filterschaumstoff ohne Aktivkohlebeladung
- 40: Geruchsfilter
- 41: Filterschaumstoff ohne Aktivkohlebeladung
- 42: hygroskopische Schicht
- 43: Filterschaumstoff mit Aktivkohlebeladung
- 44: Filterschaumstoff ohne Aktivkohlebeladung
- 50: Geruchsfilter
- 51: Mundstück
- 52: Silikon-O-Ring
- 53: Flanschkragen
- 54: Filterschaumstoff ohne Aktivkohlebeladung
- 55: Filterschaumstoff mit Aktivkohlebeladung
- 56: Filterschaumstoff ohne Aktivkohlebeladung

## Patentansprüche

1. Geruchsfilter (20, 30, 40, 50) für Raucher, insbesondere Tabak- und Cannabisraucher zur Verwendung bei der Ausatmung, umfassend zumindest eine Hülle mit einem Filtermedium,
**dadurch gekennzeichnet,**
**dass** es sich um eine poröse Hülle mit einer eingangsseitigen Öffnung (2) handelt, welche zur Aufnahme eines Mundstückes (21, 51) vorgesehen ist, in der als Filtermedium ein gasdurchlässiger, offenporiger Filterschaumstoff (27, 34, 43, 55) mit geruchsadsorbierenden Materialien einliegt, wobei das Filtermedium durch einen offenporigen, retikulierten Filterschaumstoff (26, 28, 31, 33, 35, 41, 44, 54, 56) eingangs- und ausgansseitig eingebettet ist.

2. Geruchsfilter (20, 30, 40, 50) nach Anspruch 1,
**dadurch gekennzeichnet,**
**dass** das Filtermedium aus einem atemluftdurchlässigen, retikuliertem Filterschaumstoff (26, 28, 31, 33, 35, 41, 44, 54, 56) besteht.

3. Geruchsfilter (20, 30, 40, 50) nach Anspruch 1 oder 2,
**dadurch gekennzeichnet,**
**dass** das Filtermedium aus einem offenporigen, retikulierten Filterschaumstoff (27, 34, 43, 55) aus Polymeren, vorzugsweise Polyvinylchlorid, Polyethylen, Polypropylen, besonders bevorzugt aus Polyurethan, besteht.

4. Geruchsfilter (20, 30, 40, 50) nach einem der vorangehenden Ansprüchen, **dadurch gekennzeichnet,**
**dass** der Filterschaumstoff (27, 34, 43, 55) eine Porosität von 5 bis 40 ppi, bevorzugt 10 bis 15 ppi aufweist und/oder dass der Filterschaumstoff (27, 34, 43, 55) mit einem geruchsadsorbierenden Material beladen ist, besonders bevorzugt mit Aktivkohle in Form von Kornaktivkohle mit einer Korngröße von 0,2 bis 4,00 mm, besonders bevorzugt mit einer Korngröße von 0,3 bis 1,0 mm.

5. Geruchsfilter (20, 30, 40, 50) nach einem der vorangehenden Ansprüche, **dadurch gekennzeichnet,**
**dass** die Beladung des Filterschaumstoffes (27, 34, 43, 55) 75 bis 160 kg Kornaktivkohle pro Kubikmeter, bevorzugt 90 kg bis 150 kg Kornaktivkohle pro Kubikmeter, besonders bevorzugt 100 kg bis 150 kg Kornaktivkohle pro Kubikmeter beträgt.

6. Geruchsfilter (20, 30, 40, 50) nach einem der vorangehenden Ansprüche, **dadurch gekennzeichnet,**
**dass** dem Kornaktivkohlefilterschaum ein offenporiger, retikulierter Filterschaumstoff (26, 28, 31, 33, 35, 41, 44, 54, 56) aus Polymeren, vorzugsweise Polyvinylchlorid, Polyethylen, Polypropylen, besonders bevorzugt aus Polyurethan vorgeschaltet und nachgeschaltet ist, und eine Porosität von 50 bis 100 ppi, besonders bevorzugt 80 bis 100 ppi aufweist, und eine Dicke von 0,2 bis 8 cm, bevorzugt 0,5 bis 4 cm, besonders bevorzugt 0,5 bis 1,5 cm besitzt, und/oder dass der Kornaktivkohlefilterschaum eine Größe von 157,5 x 120 x 70 mm (Länge x Breite x Tiefe) aufweist, wobei die 70 mm Tiefe durch 5 Platten Aktivkohlefilterschaum mit jeweils 14 mm Tiefe erreichbar ist, bevorzugt 117,5 x 90 x 50 mm, wobei die 50 mm Tiefe durch vier Platten Aktivkohlefilterschaum erreichbar ist und besonders bevorzugt 86 x 66 x 25 mm aufweist, wobei die Tiefe von 25 mm durch zwei Platten Aktivkohlefilterschaum erreichbar ist.

7. Geruchsfilter (20, 30, 40, 50) nach einem der vorangehenden Ansprüchen, **dadurch gekennzeichnet,**
**dass** das Filtermedium zumindest teilweise aus Aktivkohlepellets besteht, welche aus ausgepresstem Aktivkohlepulver bestehen, wobei die Pellets 4 bis 9 mm lang sind und eine Oberfläche von 1.200 qm pro Gramm aufweisen.

8. Geruchsfilter (20, 30, 40, 50) nach einem der vorangehenden Ansprüchen, **dadurch gekennzeichnet,**
**dass** sich die genannten Filterschaumstoffe (26, 27, 28, 31, 33, 34, 35, 41, 43, 44, 54, 55, 56) in einer Hülle aus einem porösen, hygroskopischen, adsorbierenden Material befinden, welches aus Cellulose, bevorzugt Zellstoff, besonders bevorzugt aus Karton besteht.

9. Geruchsfilter (20, 30, 40, 50) nach Anspruch 8,
**dadurch gekennzeichnet,**
**dass** der Karton eine poröse, hygroskopische Hülle aufweist und/oder dass der Karton porös ist und eine Dicke von 0,3 bis 5 mm, bevorzugt von 0,3 bis 2,0 mm aufweist, und ein Gewicht von 200 bis 500 Gramm pro Quadratmeter, bevorzugt 290 bis 430 Gramm pro Quadratmeter, besonders bevorzugt 320 bis 400 Gramm pro Quadratmeter aufweist, und/oder dass der Karton zu einer quaderförmigen Schachtel, besonders bevorzugt in Form einer Faltschachtel (1) besteht, welche die Dimensionen 120 x 70 x 160 mm, bevorzugt 90 x 50 x 120 mm, besonders bevorzugt 66 x 25 x 86 mm aufweist.

10. Geruchsfilter (20, 30, 40, 50) nach einem der vorangehenden Ansprüchen, **dadurch gekennzeichnet,**
**dass** die Faltschachtel (1) eingangsseitig eine Öffnung (2) aufweist, in der ein Mundstück (21, 51) aus lebensmittelechten Polyvinylchlorid, Polycarbonat, Polyethylen, besonders bevorzugt aus Polypropylen mit oder ohne Rückschlagventil (25) eingesetzt ist.

11. Geruchsfilter (20, 30, 40, 50) nach einem der vorangehenden Ansprüchen, **dadurch gekennzeichnet,**
**dass** das Mundstück (21, 51) im Inneren der Faltschachtel (1) einen Flanschkragen (54) aufweist, der die obere Öffnung (2) hintergreift, und/oder dass das Mundstück (21, 51) ein rundes Plateaumundstück (22) in der Mitte aufweist, und/oder dass ein elastischer Ring (23, 52) aus einem elastischen Material um das Mundstück (21, 51) oberhalb des durch den Karton hindurch geführten Teils des Mundstücks (21, 51) angeordnet ist, und/oder dass sich ein zweiter Ring (24) unterhalb des durch den Karton hindurch geführten Teils des Mundstücks (21, 51) befindet.

12. Geruchsfilter (20, 30, 40, 50) nach einem der vorangehenden Ansprüchen, **dadurch gekennzeichnet,**
**dass** der Ring (23, 24, 52) aus Kautschuk, Nitril-Butadien-Kautschuk, Naturkautschuk, besonders bevorzugt Silikon-Kautschuk besteht und die Form einer Kabeltülle, besonders bevorzugt eines O-Ringes besitzt.

13. Geruchsfilter (20, 30, 40, 50) nach einem der vorangehenden Ansprüchen, **dadurch gekennzeichnet,**
**dass** ein offenporiger, retikulierter Filterschaumstoff (26, 28, 31, 33, 35, 41, 44, 54, 56) aus Polyvinylchlorid, Polypropylen, Polyethylen, besonders bevorzugt aus Polyurethan mit einer Porosität von 40 bis 100 ppi, besonders bevorzugt mit 70 bis 100 ppi sich unterhalb des Mundstück (21, 51) und oberhalb des Kornaktivkohlefilterschaums sowie eine Lage unterhalb des Kornaktivkohlefilterschaums befindet.

14. Geruchsfilter (20, 30, 40, 50) nach einem der vorangehenden Ansprüchen, **dadurch gekennzeichnet,**
**dass** eine hygroskopische Schicht (32, 42) im Inneren der Faltschachtel (1) angeordnet ist, und/oder dass die hygroskopische Schicht (32, 42) zwischen zwei Filterschaumstoffen (26, 28, 31, 33, 35, 41, 44, 54, 56) ohne Aktivkohlebeladung angeordnet ist, und/oder dass die hygroskopische Schicht (32, 42) zwischen einem Filterschaumstoff (26, 28, 31, 33, 35, 41, 44, 54, 56) ohne Aktivkohlebeladung und einem Filterschaumstoff (27, 34, 43, 55) mit Aktivkohlebeladung angeordnet ist.

15. Geruchsfilter (20, 30, 40, 50) nach einem der vorangehenden Ansprüchen, **dadurch gekennzeichnet,**
**dass** der Kornaktivkohlefilterschaum aus einem offenporiger, retikulierter Filterschaumstoff (26, 28, 31, 33, 35, 41, 44, 54, 56) aus Polyvinylchlorid, Polypropylen, Polyethylen, besonders bevorzugt aus Polyurethan mit einer Porosität von 5 bis 40 ppi, bevorzugt mit 5 bis 20 ppi, besonders bevorzugt mit 10 bis 15 ppi besteht.
